# EUROPÄISCHE PATENTSCHRIFT

(11) **EP 1 678 002 B1**
(45) Veröffentlichungstag und Bekanntmachung des Hinweises auf die Patenterteilung: **11.11.2009**
(21) Anmeldenummer: 04787020.9
(22) Anmeldetag: 25.09.2004
(51) Int. Cl.: B60K 37/06, B60K 35/00, G09F 9/00

(54) **DREHKNOPF FÜR EIN KRAFTFAHRZEUG**
TURNING KNOB FOR A MOTOR VEHICLE
BOUTON TOURNANT POUR AUTOMOBILE

(30) Priorität: 20.10.2003 US 512886 P
(43) Veröffentlichungstag der Anmeldung: 12.07.2006
(73) Patentinhaber: Volkswagen Aktiengesellschaft, 38436 Wolfsburg (DE)
(72) Erfinder: DUPONT, Cedric, Sunnyvale, CA 94086 (US); STOSCHEK, Arne, Palo Alto, CA 94304 (US); SENNER, Bernhard, 85051 Ingolstadt (DE)
(86) Internationale Anmeldenummer: PCT/EP2004/010795
(87) Internationale Veröffentlichungsnummer: WO 2005/047049

(56) Entgegenhaltungen:
- EP-A- 1 089 307
- WO-A-03/036455
- WO-A-03/066366
- DE-A- 19 751 649
- DE-A- 19 849 973
- DE-A- 19 857 837
- PATENT ABSTRACTS OF JAPAN Bd. 1998, Nr. 12, 31. Oktober 1998 (1998-10-31) & JP 10 188733 A (FUJITSU TEN LTD), 21. Juli 1998 (1998-07-21)

## Beschreibung

Die Erfindung betrifft einen Drehknopf zur Bedienung eines Kraftfahrzeuges durch Drehen des Drehknopfes.

Ein solcher Drehknopf ist z.B. aus der DE 101 39 693 A1 bekannt. Gemäß der DE 101 39 693 A1 sind bei modernen elektronischen Einrichtungen im Fahrzeug, die ständig zusätzliche Funktionen mit immer mehr Optionen anböten, wegen der Begrenzung des Bauraumes für die dazugehörigen Bedienelemente Multifunktions-Bedienelemente geschaffen worden, mittels derer verschiedene Funktionen der angeschlossenen Einrichtungen bedienbar sind. So ist beispielsweise aus der EP 0 366 132 B1 eine Multifunktions-Bedieneinrichtung für Kraftfahrzeuge bekannt, bei der die Auswahl von Funktionsgruppen und die Auswahl individueller Funktionen mittels eines Drehschalters erfolgt, und bei der eine ENTER-Funktion auslösbar ist, wobei ein und derselbe bidirektionale Drehschalter zur Menü-Auswahl und individuellen Funktionsauswahl dient. Dieser Drehschalter weist dabei Raststellungen auf, denen Menüs oder einzelne Funktionen zugeordnet sind, wobei die ENTER-Funktion durch eine Axialbewegung des Drehschalters auslösbar ist. Es dient eine solche Multifunktions-Bedieneinrichtung beispielsweise zur Zieleingabe eines Navigationssystems. Es wird hierzu auf einer Anzeigeeinheit eine alphanumerische Tastatur abgebildet, in der sich der Benutzer mittels der bidirektionalen Bewegung des Drehschalters vor- und zurückbewegen kann. Wenn dann der Cursor sich auf dem gewünschten alphanumerischen Zeichen befindet, kann dieses durch eine Axialbewegung des Drehschalters ausgewählt und in das Navigationssystem übernommen werden. Des Weiteren ist aus der DE 199 41 960 A1 bekannt, ein Bedienelement als bidirektional um seine Längsachse rotierbaren Zylinder auszubilden, der federnd zur Längsachse bewegbar ist.

Zur komfortablen Bedienung und zur Vereinfachung der Haptik der Bedienung wird in der DE 101 39 693 A1 vorgeschlagen, dass ein bidirektionales Drehelement mit einer im wesentlichen parallel zu einer Fahrzeugteil-Oberfläche verlaufenden Drehachse ausgebildet ist. Mit Hilfe des bidirektionalen Drehelementes erfolgt dabei eine bidirektionale An- und/oder Auswahl von Funktionsgruppen und/oder Funktionen innerhalb einer Menüebene. Die Auswahl der Menüebenen erfolgt über eine zweite Bedieneinrichtung. Dabei kann die zweite Bedieneinrichtung durch Verschiebung des bidirektionalen Drehelementes parallel zur Drehachse des bidirektionalen Drehelementes realisiert werden. Eine weitere Variante sieht vor, das bidirektionale Drehelement zur Bildung der zweiten Bedieneinrichtung in Richtung der Drehachse als Wippe auszubilden. Eine andere Lösung sieht vor, dass eine zweite Bedieneinrichtung vorgesehen ist, welche zwei Bedienelemente aufweist, die vorzugsweise parallel zur Drehachse des bidirektionalen Drehelementes betätigbar sind. Die zweite Bedieneinrichtung ist am oder zumindest teilweise im bidirektionalen Drehelement angeordnet und bildet mit dem Drehelement eine bauliche Einheit. Zudem ist das bidirektionale Drehelement zur An- und/oder Auswahl in zwei Richtungen auf der Anzeigeeinrichtung und die zweite Bedieneinrichtung zur Auswahl in zwei weiteren Richtungen, vorzugsweise senkrecht zu den Auswahlrichtungen des bidirektionalen Drehelementes ausgebildet.

Aus der DE 31 04 384 A1 ist zudem ein Schalter einer elektrischen Einheit mit Anzeigen bekannt, bei dem eine Zähleinrichtung den durch Handbetätigung eines frei zugänglichen Drehknopfes verursachten Schaltzustand aufnimmt und entsprechend dem Zählerstand einem ortsfesten, elektronisch arbeitend ausgebildeten Anzeigefeld zuführt, wobei das Anzeigefeld und der Drehknopf dicht beieinander angeordnet sind und ein von einer den Drehknopf tragenden Schaltwelle betätigter Schaltkontakt mit der Zähleinrichtung zusammenwirkt. Dabei ist es möglich, Drehknopf und Anzeige gleichzeitig zu betrachten, weil das elektronische Anzeigefeld in den Drehknopf an dessen Front- Stirnseite eingebaut ist, wobei es von einem den Drehknopf nach hinten in Achsrichtung überragenden Verbindungsstück getragen ist und die Front-Stirnseite des Drehknopfes im wesentlichen rundum durchsichtig ist.

Aus der EP 0 329 920 A1 ist zudem ein Tastschalter mit einem Gehäuse und einem axial in diesem verschiebbar gelagerten Schaltteil bekannt. Eine als Betätigungsorgan dienende Tastkappe weist ein Basisteil mit einem rohrförmigen, am Schaltteil verrasteten Fortsatz und eine wegnehmbare, mindestens zum Teil lichtdurchlässige Schutzklappe auf. In einem vom Basisteil und der Schutzkappe begrenzten Hohlraum ist ein LED- oder LCD-Anzeigeelement mit mindestens einer Leuchtdiode und/oder einer Flüssigkristall-Sichtanzeige angeordnet, wobei das LED- oder LCD-Anzeigeelement im wesentlichen durch ein zur Verschieberichtung der Tastkappen rechtwinkliges Plättchen gebildet und noch mit elektrischen Anschlüssen versehen ist.

Ein Drehknopf ist zudem aus der EP 0 771 681 A2 bekannt.

Ein Drehknopf mit den Merkmalen des Oberbegriffs des Anspruchs 1 ist bekannt aus WO-03/066 366. Es ist Aufgabe der Erfindung, die Bedienung eines Kraftfahrzeuges zu verbessern.

Vorgenannte Aufgabe wird durch einen Drehknopf zur Bedienung eines Kraftfahrzeuges durch Drehen des Drehknopfes gelöst, wobei der Drehknopf eine (zumindest) teiltransparente sich bei einer Drehbewegung des Drehknopfes mitdrehende Anzeigeschicht und eine steuerbaren Lichtquelle zum Darstellen von veränderbaren Informationen auf der Anzeigeschicht bzw. zum Projizieren der veränderbaren Informationen auf die Anzeigeschicht aufweist. Bei der Erfindung ist mittels der steuerbaren Lichtquelle ein bewegbarer Lichtstrahl erzeugbar, dessen Auftreffposition auf die Anzeigeschicht veränderbar ist.

In vorteilhafter Ausgestaltung der Erfindung weist der Drehknopf eine Drehachse auf, die in nicht unerheblichem Maße oder im wesentlichen auf einen Betrachter gerichtet ist. Vorteilhafterweise ist eine Drehachse im wesentlichen orthogonal zur Anzeigeschicht.

In weiterhin vorteilhafter Ausgestaltung der Erfindung weist die Anzeigeschicht eine einem Bediener zugewandte Seite und eine einem Bediener abgewandte Seite auf, wobei mittels der steuerbaren Lichtquelle die dem Bediener abgewandte Seite anstrahlbar ist. Dabei kann Licht auf die dem Bediener abgewandte Seite der Anzeigeschicht in Form eines Bildes projiziert werden, das auf der dem Bediener zugewandten Seite der Anzeigeschicht sichtbar ist.

In weiterhin vorteilhafter Ausgestaltung der Erfindung ist die steuerbare Lichtquelle von der dem Bediener zugewandten Seite der Anzeigeschicht aus betrachtet (optisch) hinter der Anzeigeschicht, insbesondere in einem Abstand von 2cm bis 7cm von der Anzeigeschicht entfernt, angeordnet.

In weiterhin vorteilhafter Ausgestaltung der Erfindung die umfasst steuerbare Lichtquelle einen Laser.

In weiterhin vorteilhafter Ausgestaltung der Erfindung weist der Drehknopf eine zwischen der steuerbaren Lichtquelle und der Anzeigeschicht angeordnete Streulinse auf.

In weiterhin vorteilhafter Ausgestaltung der Erfindung ist (optisch) zwischen der steuerbaren Lichtquelle und der Anzeigeschicht ein, insbesondere gekrümmter, Umlenkspiegel zum Umlenken eines Lichtstrahls angeordnet.

In weiterhin vorteilhafter Ausgestaltung der Erfindung ist (optisch) zwischen der steuerbaren Lichtquelle und der Anzeigeschicht ein, insbesondere eine gekrümmte Reflexionsfläche aufweisendes, Prisma zum Umlenken eines Lichtstrahls angeordnet.

Vorgenannte Aufgabe wird zudem durch eine Bedienvorrichtung zur Bedienung eines Kraftfahrzeuges, mit zumindest zwei vorgenannten Drehknöpfen gelöst, die in vorteilhafter Ausgestaltung der Erfindung funktional unabhängig voneinander verwendbar sind. Dabei sind in weiterhin vorteilhafter Ausgestaltung der Erfindung auf den Anzeigeschichten der Drehknöpfe zum gleichen Zeitpunkt unterschiedliche Informationen darstellbar. Gleicher Zeitpunkt im Sinne der Erfindung kann ein gleicher Zeitpunkt im strengen Sinne bedeuten, gleicher Zeitpunkt im Sinne der Erfindung kann jedoch auch unterschiedliche Zeitpunkte umfassen, die so eng bei einander liegen, dass das menschliche Auge Bilder, die es zu diesen unterschiedlichen Zeitpunkten sieht, als gleichzeitig dargestellte Bilder wahrnimmt.

In weiterhin vorteilhafter Ausgestaltung der Erfindung weisen die Drehknöpfe eine gemeinsame Lichtquelle zum Darstellen von, insbesondere unterschiedlichen, Informationen auf ihren Anzeigeschichten auf.

Vorgenannte Aufgabe wird zudem durch eine Multifunktions-Bedieneinrichtung für ein Kraftfahrzeug gelöst, wobei die Multifunktions-Bedieneinrichtung ein Display und einen vorgenannten Drehknopf und/oder eine vorgenannte Bedienvorrichtung zur An- und/oder Auswahl von auf dem Display darstellbaren Menüpunkten aufweist.

In vorteilhafter Ausgestaltung der Erfindung sind auf dem Display darstellbare bzw. dargestellte, insbesondere ausgewählte, Menüpunkte gleichzeitig auf der Anzeigeschicht darstellbar.

Vorgenannte Aufgabe wird zudem durch ein Lenkrad für ein Kraftfahrzeug gelöst, das einen vorgenannten Drehknopf und/oder eine vorgenannte Bedienvorrichtung aufweist.

In vorteilhafter Ausgestaltung der Erfindung ist zumindest ein Drehknopf weniger als 4 cm, insbesondere weniger als 3 cm, von einem Rand des Lenkrades entfernt angeordnet.

Vorgenannte Aufgabe wird zudem durch ein Kraftfahrzeug gelöst, das einen vorgenannten Drehknopf, eine vorgenannte Bedienvorrichtung, ein vorgenanntes Lenkrad und/oder eine vorgenannte Multifunktions-Bedieneinrichtung aufweist.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: eine Innenansicht eines Kraftfahrzeuges,
- Fig. 2: einen Querschnitt durch ein Ausführungsbeispiel eines Drehknopfes,
- Fig. 3: einen Querschnitt durch ein weiteres Ausführungsbeispiel eines Drehknopfes,
- Fig. 4: einen Querschnitt durch ein weiteres Ausführungsbeispiel eines Drehknopfes,
- Fig. 5: eine perspektivische Draufsicht auf einen Drehkörper,
- Fig. 6: eine perspektivische Draufsicht auf einen Drehkörper,
- Fig. 7: eine perspektivische Draufsicht auf einen Drehkörper,
- Fig. 8: eine perspektivische Draufsicht auf einen Drehkörper,
- Fig. 9: ein Ausführungsbeispiel einer Multifunktions-Bedieneinrichtung,
- Fig. 10: ein Ausführungsbeispiel einer Bedienmaske,
- Fig. 11: eine perspektivische Draufsicht auf einen Drehkörper,
- Fig. 12: einen Querschnitt durch ein Ausführungsbeispiel eines Drehkörpers,
- Fig. 13: einen Querschnitt durch ein weiteres Ausführungsbeispiel eines Drehkörpers,
- Fig. 14: einen Querschnitt durch ein weiteres Ausführungsbeispiel eines Drehkörpers,
- Fig. 15: einen Querschnitt durch ein weiteres Ausführungsbeispiel eines Drehknopfes,
- Fig. 16: einen Querschnitt durch ein weiteres Ausführungsbeispiel eines Drehknopfes,
- Fig. 17: einen Querschnitt durch ein weiteres Ausführungsbeispiel eines Drehknopfes,
- Fig. 18: einen Querschnitt durch ein weiteres Ausführungsbeispiel eines Drehknopfes,
- Fig. 19: einen Querschnitt durch ein Ausführungsbeispiel einer Bedienvorrichtung und
- Fig. 20: eine rückwärtige Sicht auf ein Ausführungsbeispiel einer Bedienvorrichtung.

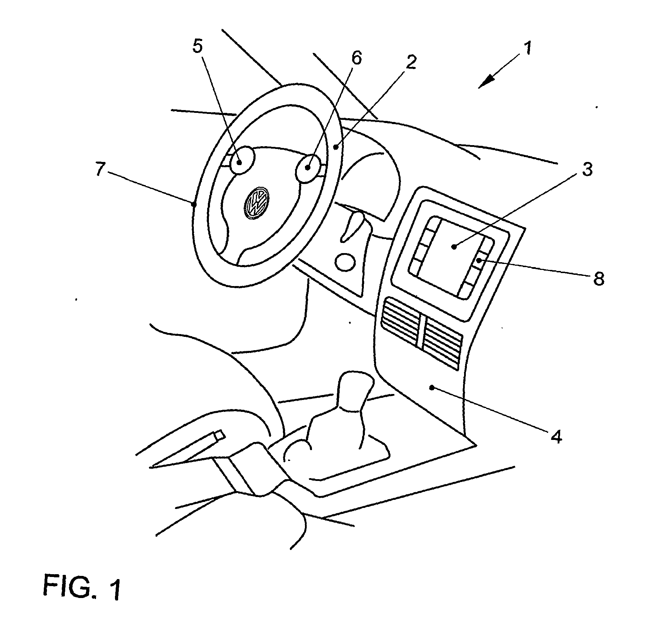

Fig. 1 zeigt eine Innenansicht eines Kraftfahrzeuges 1 mit einem Lenkrad 2. In dem Kraftfahrzeug 1 sind ein in einer Konsole 4 angeordnetes Display 3 und zwei auf dem Lenkrad 2 angeordnete Drehknöpfe 5 und 6 angeordnet. Die Drehknöpfe 5 und 6 sind in etwa 3 cm von einem Rand 7 des Lenkrades 2 entfernt angeordnet. Alternativ oder zusätzlich können auch Drehknöpfe im Bereich der Konsole 4 angeordnet sein. Im Bereich des Displays 3 sind zudem Bedienelemente 8 angeordnet.

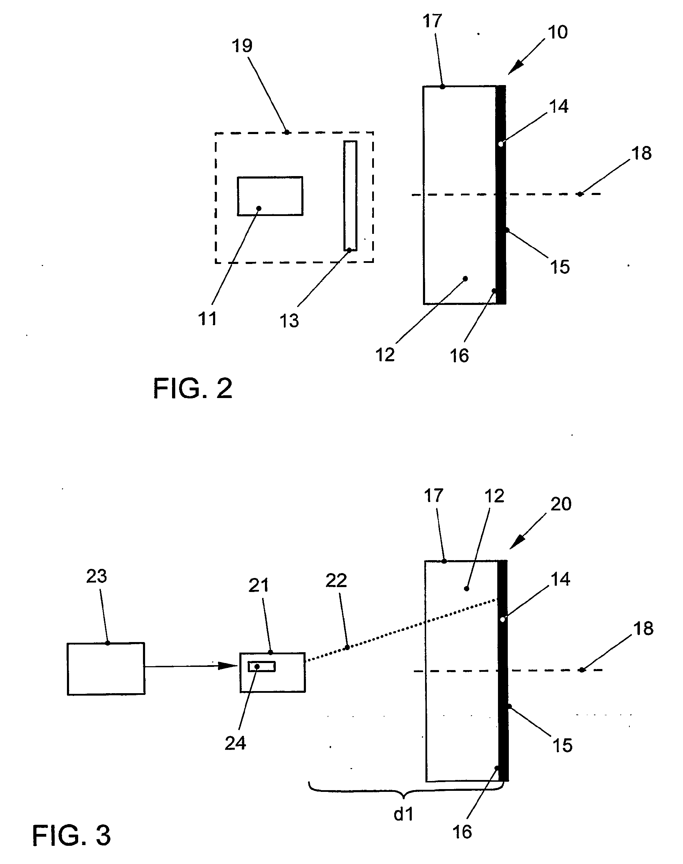

Fig. 2 zeigt einen Querschnitt durch einen Drehknopf 10 als Ausführungsbeispiel für Drehknopf 5 und/oder Drehknopf 6, wobei der Drehknopf 10 einen Drehkörper 12 mit einer zumindest teiltransparenten sich bei einer Drehbewegung des Drehknopfes 10 mitdrehenden Anzeigeschicht 14 aufweist. Die Anzeigeschicht 14 weist eine einem Bediener zugewandte Seite 15 und eine dem Bediener abgewandte Seite 16 auf. In vorteilhafter Ausgestaltung weist der Drehkörper 14 eine Drehachse 18 auf, die im wesentlichen auf einen Betrachter gerichtet ist. Dabei ist die Drehachse 18 vorteilhafterweise im wesentlichen orthogonal zur Anzeigeschicht 14 ausgerichtet.

Der Drehknopf 10 weist zudem eine steuerbare Lichtquelle 19 zum Darstellen von veränderbaren Informationen auf der Anzeigeschicht 14 bzw. zum Projizieren der veränderbaren Informationen auf der dem Bediener abgewandten Seite 16 der Anzeigeschicht 14 auf. Dabei wird Licht auf die dem Bediener abgewandte Seite 16 der Anzeigeschicht 14 in Form eines Bildes projiziert, das auf der dem Bediener zugewandten Seite 15 der Anzeigeschicht 14 sichtbar ist. Bezugszeichen 17 bezeichnet eine Seitenwand des Drehkörpers.

Die steuerbare Lichtquelle 19 umfasst eine feste Lichtquelle 11 und eine durch einen nicht dargestellten Wechselmechanismus wechselbare Schablone 13, wobei durch das Wechseln der Schablone 13 unterschiedliche Bilder auf die Anzeigeschicht 14 projizierbar sind.

Fig. 3 zeigt einen Querschnitt durch einen Drehknopf 20 als ein gegenüber dem Ausführungsbeispiel gemäß Fig. 2 bevorzugtes Ausführungsbeispiel für Drehknopf 5 und/oder Drehknopf 6. Dabei sind wie in den übrigen Figuren gleiche Elemente mit gleichen Bezugszeichen bezeichnet. Der Drehknopf 20 weist ebenfalls einen Drehkörper 12 mit einer zumindest teiltransparenten sich bei einer Drehbewegung des Drehknopfes 20 mitdrehenden Anzeigeschicht 14 auf. Zudem weist der Drehknopf 20 eine mittels einer Steuerung 23 steuerbare Lichtquelle 21 mit einem Laser auf, mittels der ein Lichtstrahl 22 über die Anzeigeschicht 14 bewegt wird. Durch geeignetes Ein- und Ausschalten des Lichtstrahls 22 und schnelles Bewegen des Lichtstrahls 22 über die Anzeigeschicht 14 wird für den Bediener aufgrund der Trägheit des menschlichen Auges auf der dem Bediener zugewandten Seite 15 der Anzeigeschicht 14 ein Bild sichtbar. Die steuerbare Lichtquelle 21 ist von der dem Bediener zugewandten Seite 15 der Anzeigeschicht 14 aus betrachtet optisch hinter der Anzeigeschicht 14 in einem Abstand d1 von 2cm bis 7cm von der Anzeigeschicht 14 entfernt angeordnet.

Das Bewegen des Lichtstrahls 22, der von dem Laser 24 erzeugt wird, erfolgt durch einen geeigneten Mechanismus, der z.B. aus der WO 03/0365553 und der EP 1 168 231 A2 bekannt ist. Eine steuerbare Lichtquelle 21 kann z.B. von der Symbol Technologies, Inc., Holtsville, NY 11742, USA oder von der Microvision, Inc., 19910 North Creek Parkway, Bothell, WA 98011, USA bezogen werden. Weitere Einzelheiten derartiger steuerbarer Lichtquellen können zudem den Internetseiten der Symbol Technologies, Inc., z.B. www.symbol.com/products/oem/lpd.html, entnommen werden.

Der zum Bewegen des Lichtstrahls 22 geeignete Mechanismus und der Laser 24 können räumlich getrennt angeordnet und z.B. durch einen Lichtleiter verbunden sein.

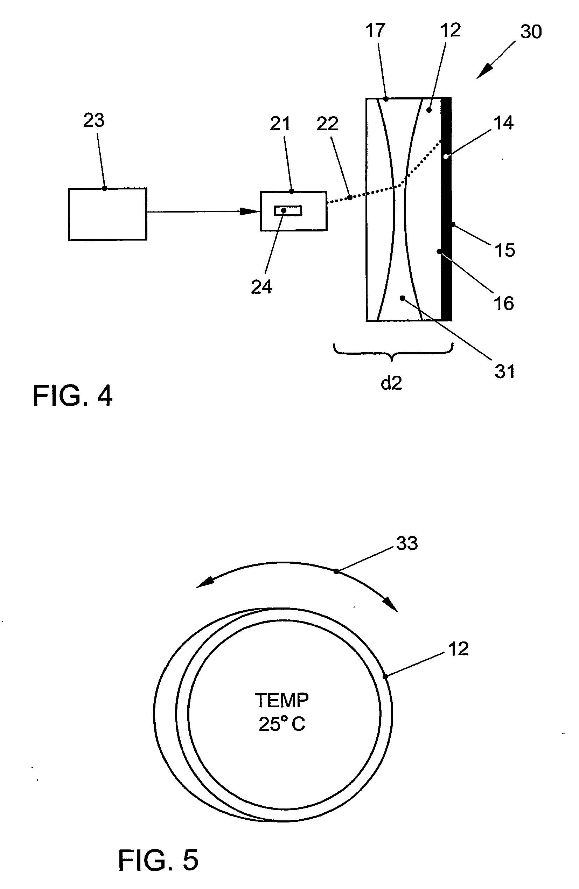

Fig. 4 zeigt einen Querschnitt durch ein weiteres bevorzugtes Ausführungsbeispiel eines Drehknopfes 30. Dabei ist zwischen der steuerbaren Lichtquelle 21 und der Anzeigeschicht 14 eine Streulinse 31 vorgesehen. Die steuerbare Lichtquelle 21 ist dabei von der dem Bediener zugewandten Seite 15 der Anzeigeschicht 14 aus betrachtet ebenfalls optisch hinter der Anzeigeschicht 14 jedoch in einem Abstand d2 von 1 cm bis 4cm von der Anzeigeschicht 14 entfernt angeordnet.

Fig. 5 zeigt eine perspektivische Draufsicht auf den Drehkörper 12 zu einem Zeitpunkt, an dem mittels des Lichtstrahls 22 "TEMP 25°C" auf der Anzeigeschicht 14 angezeigt wird. Der Drehkörper 12 ist in Richtung des Doppelpfeils 33 also, im und gegen den Uhrzeigersinn, drehbar. Ein Drehen des Drehkörpers 12 wird durch einen geeigneten nicht dargestellten Mechanismus erfasst. Ein Ausführungsbeispiel für einen solchen Mechanismus kann z.B. der DE 31 04 384 A1 oder der EP 0 771 681 A2 entnommen werden. Im vorliegenden Ausführungsbeispiel bezeichnet die Anzeige "TEMP 25°C" auf der Anzeigeschicht 14 eine mittels einer Klimaanlage eingestellte Solltemperatur von 25°C. Durch Drehen des Drehkörpers 12 gegen den Uhrzeigersinn wird die Solltemperatur verringert und durch Drehen des Drehkörpers 12 mit dem Uhrzeigersinn erhöht. Auf der Anzeigeschicht 14 wird die entsprechende neue Solltemperatur angezeigt.

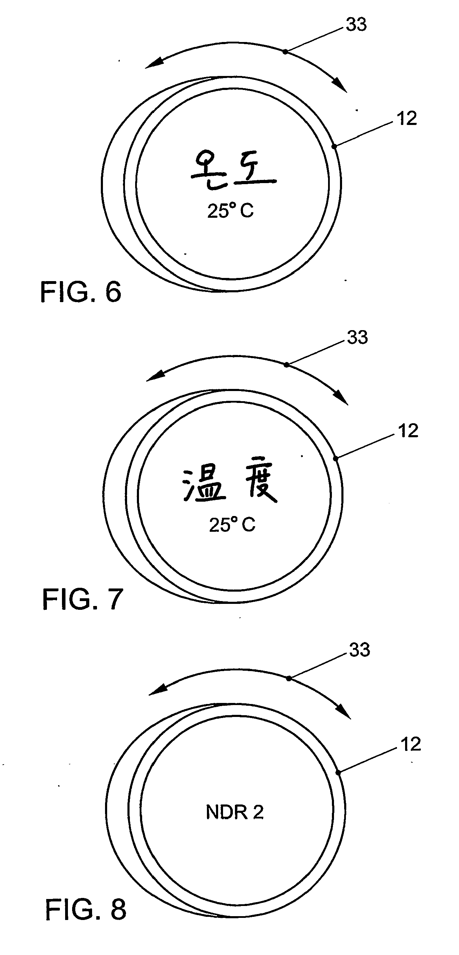

Mittels einer in Fig.6 und Fig. 7 nicht dargestellten Bedienvorrichtung für die Steuerung 23 lassen sich andere Sprachen für die selbe Funktionalität einstellen. Dabei können mittels des erfindungsgemäßen Drehknopfes nicht nur lateinische Buchstaben sondern auch komplexe Schriftzeichen - wie in Fig. 6 und Fig. 7 dargestellt - angezeigt werden. So zeigt der Drehkörpers 12 in Fig. 6 "Temperatur 25°C" in koreanischer Sprache und in Fig. 7 "Temperatur 25°C" in chinesischer Sprache an.

Mittels der oder einer weiteren in Fig. 6 und Fig. 7 bzw. Fig. 8 nicht dargestellten Bedienvorrichtung für die Steuerung 23 lassen auch andere Funktionalitäten einstellen. So zeigt Fig. 8 die Verwendung des Drehkörpers 12 zur Einstellung eines Radios. Dabei kann auf der Anzeigeschicht 14 eine empfangene Frequenz oder - wie in Fig. 8 dargestellt - ein ausgewählter Radiosender angezeigt werden. Durch Drehen des Drehkörpers 12 mit dem oder gegen den Uhrzeigersinn kann die empfangene Frequenz bzw. der ausgewählte Radiosender verändert werden.

Die in Fig. 6, Fig. 7 bzw. Fig. 8 nicht dargestellten Bedienvorrichtungen können z.B. Teil der in Fig. 1 dargestellten Bedienelemente 8 sein.

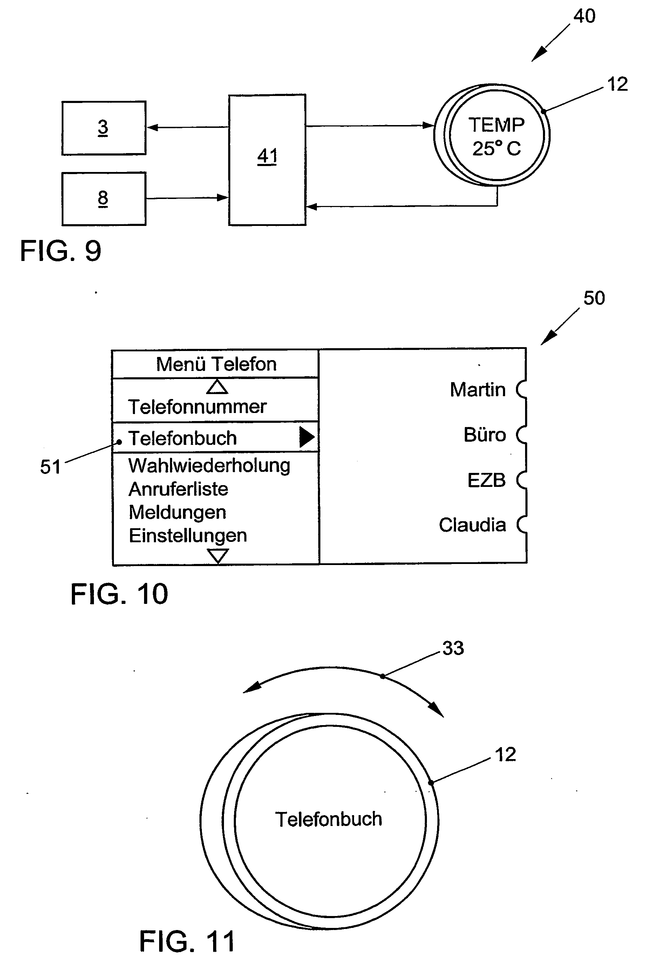

Fig. 9 zeigt ein Ausführungsbeispiel einer Multifunktions-Bedieneinrichtung 40. Die Multifunktions-Bedieneinrichtung 40 weist im vorliegenden Ausführungsbeispiel einen Drehknopf 20 oder 30 auf, wobei jedoch nur der Drehkörper 12 dargestellt ist. Die Multifunktions-Bedieneinrichtung 40 weist eine Steuerung 41 zum Ansteuern der steuerbaren Lichtquelle 21 und zum Auswerten der Drehstellung des Drehkörpers 12 auf.

Bestandteil der Multifunktions-Bedieneinrichtung 40 sind zudem das Display 3 und die Bedienelemente 8 oder ein Teil der Bedienelemente 8. Mittels des in Fig. 9 dargestellten Ausführungsbeispiels der Multifunktions-Bedieneinrichtung 40 wird eine Multifunktions-Bedieneinrichtung gemäß der DE 101 39 693 A1 fortgebildet, wobei der Drehknopf 20 bzw. 30 das Drehelement 11 gemäß der DE 101 39 693 A1 ersetzt, und wobei die Bedienelemente 8 oder ein Teil der Bedienelemente 8 den Softkeys 36 gemäß der DE 101 39 693 A1 entsprechen.

Fig. 10 zeigt ein Ausführungsbeispiel einer Telefon-Bedienmaske 50, die einer Darstellung gemäß Fig. 6 der DE 101 39 693 A1 entspricht. Bezugszeichen 51 bezeichnet eine ausgewählte Menüzeile bzw. einen ausgewählten Menüpunkt. Es ist vorgesehen, dass der Inhalt einer ausgewählte Menüzeile, also der ausgewählte Menüpunkt - wie in Fig. 11 dargestellt - auf der Anzeigeschicht 14 abgebildet wird. So ist der Inhalt der ausgewählten Menüzeile 51 in Fig. 10 die Funktionalität "Telefonbuch", die auf der Anzeigeschicht 14 abgebildet ist. Durch Drehen des Drehkörpers 12 gegen den Uhrzeigersinn wird die ausgewählte Menüzeile 51 nach oben - z.B. auf die Funktionalität "Telefonnummer" - bewegt. In diesem Fall zeigt die Anzeigeschicht 14 das Wort "Telefonnummer" an. Durch Drehen des Drehkörpers 12 im Uhrzeigersinn wird die ausgewählte Menüzeile 51 nach unten - z.B. auf die Funktionalität "Meldungen" - bewegt. In diesem Fall zeigt die Anzeigeschicht 14 das Wort "Meldungen" an.

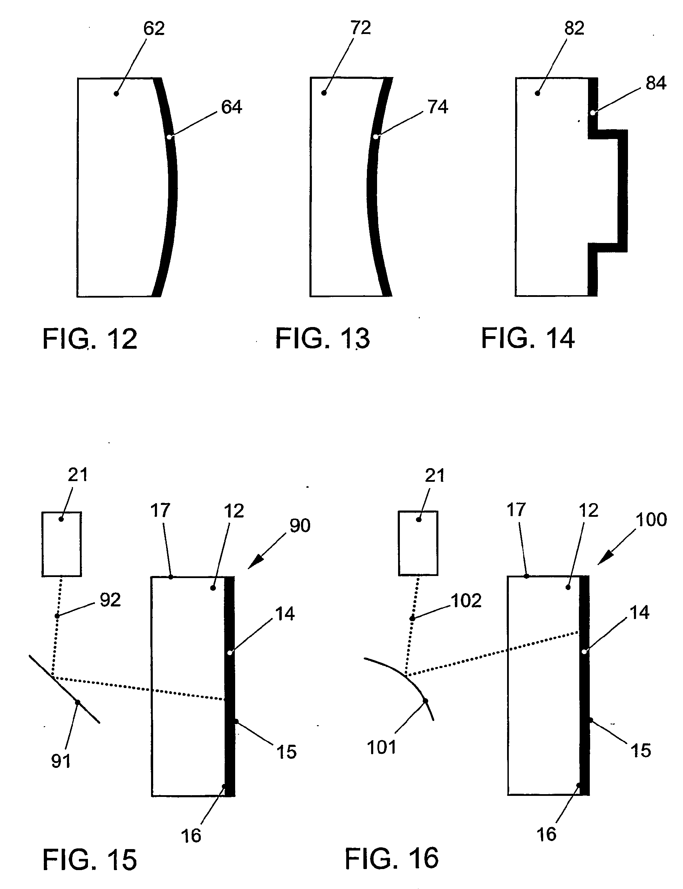

In den Ausführungsbeispielen gemäß Fig. 2, Fig. 3 und Fig. 4 ist die Anzeigeschicht 14 plan. Es sind jedoch auch weitere geometrische Ausgestaltungen der Anzeigeschicht möglich. So zeigen Fig. 12, Fig. 13 und Fig. 14 je einen Querschnitt durch ein Ausführungsbeispiel eines Drehkörpers 62, 72 bzw. 82 mit einer konvexen Anzeigeschicht 64, einer konkaven Anzeigeschicht 74 bzw. einer gestuften Anzeigeschicht 84. Derartige Drehkörper 62, 72 bzw. 82 können sowohl den Drehkörper 12 gemäß Fig. 2, Fig. 3 und Fig. 4 als auch die Drehkörper 12 und 212 gemäß Fig. 15, Fig. 16, Fig. 17, Fig. 18, Fig. 19 und Fig. 20 ersetzen.

Fig. 15 und Fig. 16 zeigen je einen Querschnitt durch ein weiteres Ausführungsbeispiel eines Drehknopfes 90 bzw. 100, wobei ein Lichtstrahl 92 bzw. 102 mittels eines zwischen der steuerbaren Lichtquelle 21 und der Anzeigeschicht 14 angeordneten Spiegels 91 bzw. 101 auf die Anzeigeschicht 14 gelenkt wird. Der Spiegel 91 des Drehknopfes 90 ist plan während der Spiegel 101 des Drehknopfes 100 gekrümmt ist.

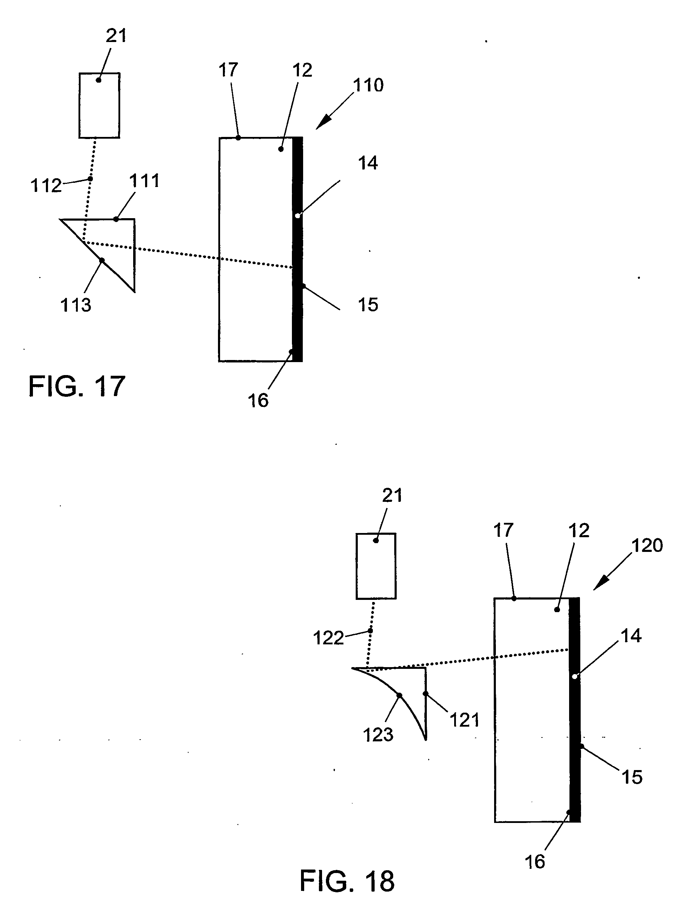

Fig. 17 und Fig. 18 zeigen je einen Querschnitt durch ein weiteres Ausführungsbeispiel eines Drehknopfes 110 bzw. 120, wobei ein Lichtstrahl 112 bzw. 122 mittels eines zwischen der steuerbaren Lichtquelle 21 und der Anzeigeschicht 14 angeordneten Prismas 111 bzw. 121 auf die Anzeigeschicht 14 gelenkt wird. Das Prisma 111 des Drehknopfes 110 weist eine plane Reflexionsfläche 113 auf, während das Prisma 121 des Drehknopfes 120 eine gekrümmte Reflexionsfläche 123 aufweist.

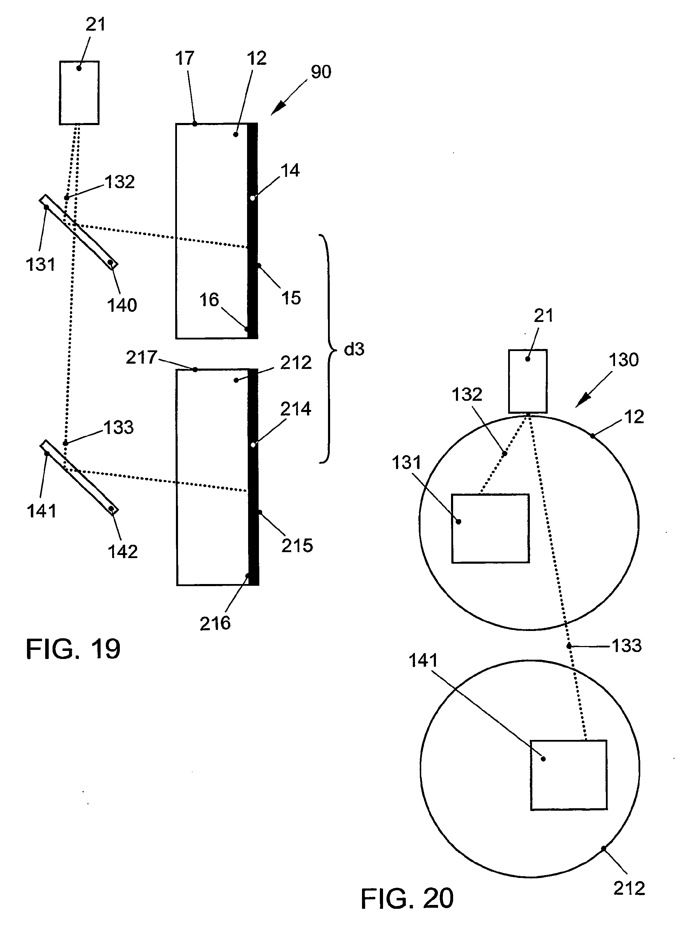

Fig. 19 zeigt eine Querschnitt durch ein Ausführungsbeispiel einer Bedienvorrichtung 130 zur Bedienung eines Kraftfahrzeuges. Fig. 20 zeigt eine rückwärtige Sicht auf das Ausführungsbeispiel der Bedienvorrichtung 130. Die Bedienvorrichtung weist funktional unabhängig voneinander verwendbare, in einem Abstand d3 zwischen 3cm und 10cm voneinander entfernt angeordnete Drehkörper 12 und 212 mit Anzeigeschichten 14 und 214 auf. Der Drehkörper 212 weist eine zumindest teiltransparente sich bei einer Drehbewegung des Drehkörpers 212 mitdrehende Anzeigeschicht 214 auf. Die Anzeigeschicht 214 weist eine einem Bediener zugewandte Seite 215 und eine dem Bediener abgewandte Seite 216 sowie eine Seitenwand 217 auf.

Auf den Anzeigeschichten 14 und 214 der Drehkörper 12 und 212 sind zum gleichen Zeitpunkt unterschiedliche Informationen darstellbar. Gleicher Zeitpunkt im Sinne der Erfindung kann ein gleicher Zeitpunkt im strengen Sinne bedeuten, gleicher Zeitpunkt im Sinne der Erfindung kann jedoch auch unterschiedliche Zeitpunkte umfassen, die jedoch so eng bei einander liegen, dass das menschliche Auge Bilder, die es zu diesen unterschiedlichen Zeitpunkten sieht, als gleichzeitig dargestellte Bilder wahrnimmt.

Die Drehkörper 12 und 212 bilden zusammen mit der steuerbaren Lichtquelle 21 und mit den Spiegeln 131 und 141 Drehknöpfe, die eine gemeinsame steuerbare Lichtquelle 21 zum Darstellen von, insbesondere unterschiedlichen, Informationen auf ihren Anzeigeschichten 14 und 214 aufweisen. Die Spiegel 131 und 141 sind - wie in Fig. 19 gezeigt - leicht geneigt, so dass die Oberseite 140 des Spiegels 131 und die Unterseite 142 des Spiegels 141 sichtbar sind. Die Spiegel 131 und 141 sind zudem - wie in Fig. 20 gezeigt - gegeneinander versetzt. Auf diese Weise werden beide Anzeigeschichten 14 und 214 im Sinne der Erfindung gleichzeitig von dem Lichtstrahl 132 überstrichen: Wird der Lichtstrahl 132 - in Bezug auf Fig. 20 - weit genug nach rechts bewegt, folgt er der gestrichelten Linie 133, so dass die Anzeigeschicht 214 überstrichen wird.

Die Drehknöpfe 90, 100, 110 und 120 gemäß Fig. 15, Fig. 16, Fig. 17 und Fig. 18 und die Bedienvorrichtung gemäß Fig. 19 und Fig. 20 können in Verbindung mit einer Streulinse entsprechend dem Ausführungsbeispiel gemäß Fig. 4 ausgeführt werden.

Die Elemente und Schichten in den Figuren sind unter Berücksichtigung von Einfachheit und Klarheit und nicht notwendigerweise maßstabsgetreu gezeichnet. So sind z.B. die Größenordnungen einiger Elemente bzw. Schichten übertrieben gegenüber anderen Elementen bzw. Schichten dargestellt, um das Verständnis der Ausführungsbeispiele der vorliegenden Erfindung zu verbessern.

### Bezugszeichenliste

- 1: Kraftfahrzeug
- 2: Lenkrad
- 3: Display
- 4: Konsole
- 5, 6, 10, 20, 30, 90, 100, 110, 120: Drehknopf
- 7: Rand
- 8: Bedienelemente
- 11: Lichtquelle
- 12,62,72,82,212: Drehkörper
- 13: Schablone
- 14, 64, 74, 84, 214: Anzeigeschicht
- 15, 215: einem Bediener zugewandte Seite
- 16, 216: einem Bediener abgewandte Seite
- 17, 217: Seitenwand
- 18: Drehachse
- 19, 21: steuerbare Lichtquelle
- 22, 92, 102,112,122, 132: Lichtstrahl
- 23, 41: Steuerung
- 24: Laser
- 31: Streulinse
- 33: Doppelpfeil
- 40: Multifunktions-Bedieneinrichtung
- 50: Telefon-Bedienmaske
- 51: Menüzeile
- 91, 101, 131, 141: Spiegel
- 111, 121: Prisma
- 113, 123: Reflexionsfläche
- 130: Bedienvorrichtung
- 133: gestrichelte Linie
- 140: Oberseite
- 142: Unterseite
d1, d2, d3 Abstand

## Patentansprüche

1. Drehknopf (5, 6, 10, 20, 30, 90, 100, 110, 120) zur Bedienung eines Kraftfahrzeuges (1) durch Drehen des Drehknopfes (5, 6, 10, 20, 30, 90, 100, 110, 120), wobei der Drehknopf (5, 6, 10, 20, 30, 90, 100, 110, 120) eine zumindest teiltransparente, sich bei einer Drehbewegung des Drehknopfes (5, 6, 10, 20, 30, 90, 100, 110, 120) mitdrehende Anzeigeschicht (14, 214) und eine steuerbare Lichtquelle (19, 21) zum Projizieren der veränderbaren Informationen auf die Anzeigeschicht (14, 214) aufweist, **dadurch gekennzeichnet, dass** mittels der steuerbaren Lichtquelle ein bewegbarer Lichtstrahl erzeugbar ist, dessen Auftreffposition auf die Anzeigeschicht veränderbar ist.

2. Drehknopf (5, 6, 10, 20, 30, 90, 100, 110, 120) nach Anspruch 1, **dadurch gekennzeichnet, dass** die Anzeigeschicht (14, 214) eine einem Bediener zugewandte Seite (15, 215) und eine einem Bediener abgewandte Seite (16, 216) aufweist, wobei mittels der steuerbaren Lichtquelle (19, 21) die dem Bediener abgewandte Seite (16, 216) anstrahlbar ist.

3. Drehknopf (5, 6, 10, 20, 30, 90, 100, 110, 120) nach Anspruch 1 oder 2, **dadurch gekennzeichnet, dass** die steuerbare Lichtquelle (19, 21) von der dem Bediener zugewandten Seite (15, 215) der Anzeigeschicht (14, 214) aus betrachtet hinter der Anzeigeschicht (14, 214) angeordnet ist.

4. Drehknopf (5, 6, 10, 20, 30, 90, 100, 110, 120) nach Anspruch 1, 2 oder 3, **dadurch gekennzeichnet, dass** die steuerbare Lichtquelle (21) einen Laser (24) umfasst.

5. Drehknopf (5, 6, 10, 20, 30, 90, 100, 110, 120) nach einem der vorhergehenden Ansprüche, **dadurch gekennzeichnet, dass** er eine zwischen der steuerbaren (21) Lichtquelle und der Anzeigeschicht (14, 214) angeordnete Streulinse (31) aufweist.

6. Drehknopf (5, 6, 10, 20, 30, 90, 100, 110, 120) nach einem der vorhergehenden Ansprüche, **dadurch gekennzeichnet, dass** zwischen der steuerbaren Lichtquelle (21) und der Anzeigeschicht (14, 214) ein Umlenkspiegel (91,101, 131, 141) zum Umlenken eines Lichtstrahls angeordnet ist.

7. Drehknopf (5, 6, 10, 20, 30, 90, 100, 110, 120) nach Anspruch 6, **dadurch gekennzeichnet, dass** der Umlenkspiegel (101) gekrümmt ist.

8. Drehknopf (5, 6, 10, 20, 30, 90, 100, 110, 120) nach einem der vorhergehenden Ansprüche, **dadurch gekennzeichnet, dass** zwischen der steuerbaren Lichtquelle und der Anzeigeschicht (14, 214) ein Prisma (111, 121) zum Umlenken eines Lichtstrahls angeordnet ist.

9. Drehknopf (5, 6, 10, 20, 30, 90, 100, 110, 120) nach Anspruch 8, **dadurch gekennzeichnet, dass** das Prisma (121) eine gekrümmte Reflexionsfläche (123) aufweist.

10. Bedienvorrichtung (130) zur Bedienung eines Kraftfahrzeuges (1), **dadurch gekennzeichnet, dass** die Bedienvorrichtung (130) zumindest zwei Drehknöpfe nach einem der vorhergehenden Ansprüche aufweist.

11. Bedienvorrichtung (130) nach Anspruch 10, **dadurch gekennzeichnet, dass** die Drehknöpfe funktional unabhängig verwendbar sind.

12. Bedienvorrichtung nach Anspruch 10 oder 11, **dadurch gekennzeichnet, dass** auf den Anzeigeschichten (14, 214) der Drehknöpfe zum gleichen Zeitpunkt unterschiedliche Informationen darstellbar sind.

13. Bedienvorrichtung nach Anspruch 10, 11 oder 12, **dadurch gekennzeichnet, dass** die Drehknöpfe eine gemeinsame Lichtquelle (21) zum Darstellen von Informationen auf ihren Anzeigeschichten (14, 214) aufweisen.

14. Multifunktions-Bedieneinrichtung (40) für ein Kraftfahrzeug, wobei die Multifunktions-Bedieneinrichtung ein Display (3) aufweist, **dadurch gekennzeichnet, dass** die Multifunktions-Bedieneinrichtung (40) einen Drehknopf nach einem der Ansprüche 1 bis 9 und/oder eine Bedienvorrichtung (8) nach Anspruch 10, 11, 12 oder 13 zur An- und/oder Auswahl von auf dem Display (3) darstellbaren Menüpunkten aufweist.

15. Multifunktions-Bedieneinrichtung nach Anspruch 14, **dadurch gekennzeichnet, dass** auf dem Display (3) darstellbare Menüpunkte gleichzeitig auf der Anzeigeschicht (14, 214) darstellbar sind.

16. Lenkrad (2) für ein Kraftfahrzeug (1), **dadurch gekennzeichnet, dass** es einen Drehknopf (5, 6) nach einem der Ansprüche 1 bis 10 oder eine Bedienvorrichtung (130) nach Anspruch 11, 12, 13 oder 14 aufweist.

17. Lenkrad (2) für ein Kraftfahrzeug (1) nach Anspruch 16, **dadurch gekennzeichnet, dass** zumindest ein Drehknopf (5, 6) weniger als 4 cm von einem Rand (7) des Lenkrades (1) entfernt angeordnet ist.

18. Lenkrad (2) für ein Kraftfahrzeug (1) nach Anspruch 16, **dadurch gekennzeichnet, dass** zumindest ein Drehknopf (5, 6) weniger als 3 cm von einem Rand (7) des Lenkrades (2) entfernt angeordnet ist.

19. Kraftfahrzeug (1), **dadurch gekennzeichnet, dass** es einen Drehknopf (5, 6, 10, 20, 30, 90, 100, 110, 120) nach einem der Ansprüche 1 bis 9, eine Bedienvorrichtung (130) nach Anspruch 10, 11, 12 oder 13, eine Multifunktions-Bedieneinrichtung (40) nach Anspruch 14 oder 15 oder ein Lenkrad (2) nach Anspruch 16, 17 oder 18 aufweist.

## Claims

1. Turning knob (5, 6, 10, 20, 30, 90, 100, 110, 120) for operating a motor vehicle (1) by rotating the turning knob (5, 6, 10, 20, 30, 90, 100, 110, 120), wherein the turning knob (5, 6, 10, 20, 30, 90, 100, 110, 120) has an at least partially transparent display layer (14, 214) which also rotates when the turning knob (5, 6, 10, 20, 30, 90, 100, 110, 120) rotates, and a controllable light source (19, 21) for projecting the variable information onto the display layer (14, 214), **characterized in that** a moveable light beam whose position of incidence on the display layer can be varied can be generated by means of the controllable light source.

2. Turning knob (5, 6, 10, 20, 30, 90, 100, 110, 120) according to Claim 1, **characterized in that** the display layer (14, 214) has a side (15, 215) facing the operator and a side (16, 216) facing away from the operator, wherein the side (16, 216) facing away from the operator can be irradiated by means of the controllable light source (19, 21).

3. Turning knob (5, 6, 10, 20, 30, 90, 100, 110, 120) according to Claim 1 or 2, **characterized in that** the controllable light source (19, 21) is arranged behind the Display layer (14, 214) when viewed from the side (15, 215) of the display layer (14, 214) facing the operator.

4. Turning knob (5, 6, 10, 20, 30, 90, 100, 110, 120) according to Claim 1, 2 or 3, **characterized in that** the controllable light source (21) comprises a laser (24).

5. Turning knob (5, 6, 10, 20, 30, 90, 100, 110, 120) according to one of the preceding claims, **characterized in that** it has a lens (31) which is arranged between the controllable light source (21) and the display layer (14, 214).

6. Turning knob (5, 6, 10, 20, 30, 90, 100, 110, 120) according to one of the preceding claims, **characterized in that** a deflecting mirror (91, 101, 131, 141) for deflecting a light beam is arranged between the controllable light source (21) and the display layer (14, 214).

7. Turning knob (5, 6, 10, 20, 30, 90, 100, 110, 120) according to Claim 6, **characterized in that** the deflecting mirror (101) is curved.

8. Turning knob (5, 6, 10, 20, 30, 90, 100, 110, 120) according to one of the preceding claims, **characterized in that** a prism (111, 121) for deflecting a light beam is arranged between the controllable light source and the display layer (14, 214).

9. Turning knob (5, 6, 10, 20, 30, 90, 100, 110, 120) according to Claim 8, **characterized in that** the prism (121) has a curved reflection face (123).

10. Operator control device (130) for operating a motor vehicle (1), **characterized in that** the operator control device (130) has at least two turning knobs according to one of the preceding claims.

11. Operator control device (130) according to Claim 10, **characterized in that** the turning knobs can be used functionally independently.

12. Operator control device according to Claim 10 or 11, **characterized in that** different information can be displayed on the display layers (14, 214) of the turning knobs at the same time.

13. Operator control device according to Claim 10, 11 or 12, **characterized in that** the turning knobs have a common light source (21) for displaying information on their display layers (14, 214).

14. Multi-functional operator control device (40) for a motor vehicle, wherein the multifunctional operator control device has a display (3), **characterized in that** the multifunction operator control device (40) has a turning knob according to one of Claims 1 to 9 and/or an operator control device (8) according to Claim 10, 11, 12 or 13 for choosing and/or selecting menu items which can be displayed on the display (3).

15. Multi-functional operator control device according to Claim 14, **characterized in that** menu items which can be displayed on the display (3) can be displayed simultaneously on the display layer (14, 214).

16. Steering wheel (2) for a motor vehicle (1), **characterized in that** it has a turning knob (5, 6) according to one of Claims 1 to 10 or an operator control device (130) according to Claim 11, 12, 13 or 14.

17. Steering wheel (2) for a motor vehicle (1) according to Claim 16, **characterized in that** at least one turning knob (5, 6) is arranged less than 4 cm away from an edge (7) of the steering wheel (2).

18. Steering wheel (2) for a motor vehicle (1) according to Claim 16, **characterized in that** at least one turning knob (5, 6) is arranged less than 3 cm away from an edge (7) of the steering wheel (2).

19. Motor vehicle (1) **characterized in that** it has a turning knob (5, 6, 10, 20, 30, 90, 100, 110, 120) according to one of Claims 1 to 9, an operator control device (130) according to Claim 10, 11, 12 or 13, a multi-functional operator control device (40) according to Claim 14 or 15 or a steering wheel (2) according to Claim 16, 17 or 18.

## Revendications

1. Bouton (5, 6, 10, 20, 30, 90, 100, 110, 120) pour commander un véhicule automobile (1) en tournant le bouton (5, 6, 10, 20, 30, 90, 100, 110, 120), le bouton (5, 6, 10, 20, 30, 90, 100, 110, 120) présentant une couche d'indication (14, 214) au moins partiellement transparente qui accompagne la rotation lors d'un mouvement de rotation du bouton (5, 6, 10, 20, 30, 90, 100, 110, 120) et une source de lumière (19, 21) commandable pour projeter des informations modifiables sur la couche d'indication (14, 214), **caractérisé en ce que** la source de lumière commandable permet de générer un rayon de lumière mobile dont le point d'impact sur la couche d'indication est modifiable.

2. Bouton (5, 6, 10, 20, 30, 90, 100, 110, 120) selon la revendication 1, **caractérisé en ce que** la couche d'indication (14, 214) présente un côté qui fait face à l'opérateur (15, 215) et un côté opposé à l'opérateur (16, 216), le côté opposé à l'opérateur (16, 216) pouvant être irradié au moyen de la source de lumière commandable (19, 21).

3. Bouton (5, 6, 10, 20, 30, 90, 100, 110, 120) selon la revendication 1 ou 2, **caractérisé en ce que** la source de lumière commandable (19, 21), vue depuis le côté (15, 215) de la couche d'indication (14, 214) qui fait face à l'opérateur, est disposée derrière la couche d'indication (14, 214).

4. Bouton (5, 6, 10, 20, 30, 90, 100, 110, 120) selon la revendication 1, 2 ou 3, **caractérisé en ce que** la source de lumière commandable (21) comprend un laser (24).

5. Bouton (5, 6, 10, 20, 30, 90, 100, 110, 120) selon l'une des revendications précédentes, **caractérisé en ce qu'**il présente une lentille divergente (31) disposée entre la source de lumière commandable (21) et la couche d'indication (14, 214).

6. Bouton (5, 6, 10, 20, 30, 90, 100, 110, 120) selon l'une des revendications précédentes, **caractérisé en ce qu'**un miroir de déviation (91, 101, 131, 141) destiné à dévier un rayon lumineux est disposé entre la source de lumière commandable (21) et la couche d'indication (14, 214).

7. Bouton (5, 6, 10, 20, 30, 90, 100, 110, 120) selon la revendication 6, **caractérisé en ce que** le miroir de déviation (101) est courbe.

8. Bouton (5, 6, 10, 20, 30, 90, 100, 110, 120) selon l'une des revendications précédentes, **caractérisé en ce qu'**un prisme (111, 121) destiné à dévier un rayon lumineux est disposé entre la source de lumière commandable et la couche d'indication (14, 214).

9. Bouton (5, 6, 10, 20, 30, 90, 100, 110, 120) selon la revendication 8, **caractérisé en ce que** le prisme (121) présente une surface de réflexion (123) courbe.

10. Dispositif de commande (130) pour commander un véhicule automobile (1), **caractérisé en ce que** le dispositif de commande (130) présente au moins deux boutons selon l'une des revendications précédentes.

11. Dispositif de commande (130) selon la revendication 10, **caractérisé en ce que** les boutons peuvent être utilisés fonctionnellement indépendamment.

12. Dispositif de commande selon la revendication 10 ou 11, **caractérisé en ce que** des informations différentes peuvent être présentées au même moment sur les couches d'indication (14, 214) des boutons.

13. Dispositif de commande selon la revendication 10, 11 ou 12, **caractérisé en ce que** les boutons présentent une source de lumière commune (21) pour représenter des informations sur leurs couches d'indication (14, 214).

14. Dispositif de commande multifonction (40) pour un véhicule automobile, le dispositif de commande multifonction présentant un afficheur (3), **caractérisé en ce que** le dispositif de commande multifonction (40) présente un bouton selon l'une des revendications 1 à 9 et/ou un dispositif de commande (8) selon la revendication 10, 11, 12 ou 13 pour sélectionner des commandes de mesure qui peuvent être représentées sur l'afficheur (3).

15. Dispositif de commande multifonction selon la revendication 14, **caractérisé en ce que** les commandes de mesure qui peuvent être représentées sur l'afficheur (3) peuvent simultanément être représentées sur la couche d'indication (14, 214).

16. Volant (2) pour un véhicule automobile (1), **caractérisé en ce qu'**il présente un bouton (5, 6) selon l'une des revendications 1 à 10 ou un dispositif de commande (130) selon la revendication 11, 12, 13 ou 14.

17. Volant (2) pour un véhicule automobile (1) selon la revendication 16, **caractérisé en ce qu'**au moins un bouton (5, 6) est espacé de moins de 4 cm d'un bord (7) du volant (2).

18. Volant (2) pour un véhicule automobile (1) selon la revendication 16, **caractérisé en ce qu'**au moins un bouton (5, 6) est espacé de moins de 3 cm d'un bord (7) du volant (2).

19. Véhicule automobile (1), **caractérisé en ce qu'**il présente un bouton (5, 6, 10, 20, 30, 90, 100., 110, 120) selon l'une des revendications 1 à 9, un dispositif de commande (130) selon la revendication 10, 11, 12 ou 13, un dispositif de commande multifonction (40) selon la revendication 14 ou 15 ou un volant (2) selon la revendication 16, 17 ou 18.
